Europäisches Patentamt

European Patent Office

Office européen des brevets

(11) Veröffentlichungsnummer: **0 184 636**
**A1**

(12) **EUROPÄISCHE PATENTANMELDUNG**

(21) Anmeldenummer: 85113066.6

(22) Anmeldetag: 15.10.85

(51) Int. Cl.⁴: **A 01 M 31/02**

(30) Priorität: 16.10.84 DE 3437848

(43) Veröffentlichungstag der Anmeldung: 18.06.86
Patentblatt 86/25

(84) Benannte Vertragsstaaten: **AT BE CH DE FR GB IT LI NL SE**

(71) Anmelder: **Schmitte, Werner, Rolshover Strasse 58-60, D-5000 Köln 91 (DE)**

(72) Erfinder: **Schmitte, Werner, Rolshover Strasse 58-60, D-5000 Köln 91 (DE)**

(74) Vertreter: **Baur, Eduard, Dr.-Ing. Dipl.-Ing., Werderstrasse 3, D-5000 Köln 1 (DE)**

(54) **Anhänger mit Kabine.**

(57) Bei einem für den Straßenbetrieb tauglichen Anhänger eines Kraftfahrzeuges, insbesondere Personenkraftwagens mit einer Kabine, die einen Zugang und Fenster aufweist ist die Kabine (19) auf dem Anhänger (10) in der Höhenlage verstellbar angeordnet. Dabei sind an dem Gestell des Anhängers an den beiden gegenüberliegenden Seiten, insbesondere Längsseiten, nach oben ragende Streben (15a, 15b, 15c, 15d) angeschweißt, an denen die Kabine befestigt und in der Höhe verstellbar ist. Damit ist ein fahrbarer Hochsitzstand für Jäger vorhanden.

TENTANWALT DR.-ING. EDUARD BAUR

5 KÖLN 1,       8.10.85 Dr.B/Str
Werderstraße 3
Telefon (0221) 524208-9

| Sh 2002 |
Reg.-Nr. bitte angeben

Patentanmeldung

des

Herrn Werner Schmitte, Rolshover Straße 58 - 60
5000 Köln 91 (Kalk)

"Anhänger mit Kabine"

Die Erfindung betrifft einen für den Straßenbetrieb tauglichen
Anhänger eines Kraftfahrzeuges, insbesondere Personenkraftwagens mit einer Kabine, die einen Zugang und Fenster hat.

Anhänger der vorgenannten Ausbildung sind vielfach bekannt. So
kann beispielsweise hingewiesen werden auf Wohnwagen oder auch
Anhänger zum Transport von Pferden.

Die vorliegende Erfindung geht von der Aufgabe aus, einen Anhänger mit Kabine zu schaffen, bei der die Kabine mit einfachen

- 2 -

Mitteln eine Hochlage einnehmen und damit insbesondere als Hochsitzstand für Jagdzwecke Anwendung finden soll.

Zur Lösung dieser Aufgabe wird bei einem für den Straßenbetrieb
tauglichen Anhänger eines Kraftfahrzeuges, insbesondere Personenkraftwagens mit einer Kabine, die einen Zugang und Fenster aufweist, erfindungsgemäß vorgeschlagen, daß die Kabine auf dem Anhänger in der Höhenlage verstellbar angeordnet ist.

In weiterer erfindungsgemäßer Ausgestaltung wird vorgeschlagen, daß
an dem Gestell des Anhängers an den beiden gegenüberliegenden Seiten, insbesondere Längsseiten, nach oben ragende Streben angeordnet sind, an denen die Kabine gelagert und in der Höhe verstellbar ist. Durch diese Maßnahme wird die Grundlage für eine einfache
bauliche Ausführung und Höhenverstellbarkeit der Kabine gegeben.
Dabei erfolgt bevorzugt die Höhenverstellung durch eine am Gestell
des Hängers angeordnete, vorteilhaft über eine Handkurbel angetriebene Seilwinde in Verbindung mit an dem die Kabine tragenden
Gestell angeordneten Seilrollen.

In weiterer erfindungsgemäßer Ausgestaltung wird vorgeschlagen,
daß die Streben einer jeden Seite zu einem Rechteck zusammengefügt
sind und an den gegenüberliegenden oberen Ecken des Rechteckes die
Drehachse der als Quader ausgebildeten Kabine vorhanden ist, die
dort an ihrer unteren, parallel zur Drehachse der Kabine bzw. Radachse des Anhängers verlaufenden Kante des Kabinenbodens schwenkbar angelenkt ist und an den beiden anderen unteren Kanten des Bodens der Kabine jeweils zugeordnet ein Seil angelenkt ist, das über eine zugeordnete Rolle geführt ist, die an der oberen Kante des Rahmens gelagert ist und die beiden Seile zu einer Seiltrommel geführt sind, die an dem Gestell des Hängers befestigt und mit einem Antrieb, insbesondere in Gestalt einer Handkurbel, versehen ist. Durch diese Lösung wird die Kabine durch Schwenken um eine hochgelegene Achse aus der Fahrstellung in die Gebrauchsstellung angehoben.

Um die Hochlage zu sichern, wird in weiterer erfindungsgemäßer Ausgestaltung vorgeschlagen, daß in der Hoch- und Gebrauchsstellung die Kabine an der Kante ihres Bodens durch zwei Holme, die zugleich die Sprossen einer Leiter tragen, an dem Gestell des Hängers abgestützt ist. Dazu besteht eine einfache Lösung darin, daß an der Unterkante des Kabinenbodens zwei nach unten und in Richtung nach außen abstehende Zapfen angeordnet sind, die mit den Holmen der Leiter eine Steckverbindung darstellen und an den beiden Holmen der Leiter im unteren Bereich Klauen vorhanden sind, die in zugeordnete Halterungen an dem Gestell des Hängers eingreifen. Dabei ist bevorzugt die Lösung, daß die Zapfen am Boden der Kabine als Rohre ausgebildet sind, in die die oberen Enden der Holme eingreifen und die an den Holmen angeordneten Klauen von oben eine Querstrebe des Hängers umgreifen.

Die vorgenannte Lösung, die Kabine um eine hochgelegene, in horizontaler Ebene angeordnete Drehachse zu schwenken und neben dieser einen ortsfesten Lagerung die weitere Lagerung durch eine entfernbare Leiter durchzuführen, ist besonders einfach und sicher, so daß sie den Anforderungen an einen Hochsitzstand, der vielfach längere Zeit im Freien steht, sehr gerecht wird.

In vielen Fällen kann es vorteilhaft sein, die Höhenverstellung der Kabine am Hänger in der Weise vorzunehmen, daß an dem Hänger ein aus Metallstreben zusammengesetztes quaderförmiges Gestell befestigt ist, das in der Fahrstellung des Hängers die Kabine umgibt, wobei den vier oberen Ecken des Gestells und den vier Ecken der Bodenplatte der Kabine jeweils eine Seilumlenkrolle zugeordnet ist, weiterhin eine quer zur Fahrtrichtung des Hängers verlaufende Achse mit einem Antrieb, vorteilhaft in Gestalt einer Handkurbel mit zwei Seilwinden vorhanden ist und an dem Hänger bzw. den Streben des Gestells einer jeden Seite jeweils ein Seil zugeordnet ist, wobei ein Seil über die erste obere Umlenkrolle des Gestells, dann über die beiden Umlenkrollen am Boden der Kabine und anschließend über die weitere Umlenkrolle des Gestells zu der Seilwinde geführt ist. Diese Lösung hat den Vorteil, daß die Kabine auch in der unteren Stellung am Anhänger nutzbar ist. So kann sie entsprechend in ihrer unteren Stellung auch als Transporteinrichtung dienen, beispielsweise, genutzt von einem Jäger, zum Transport des Futters zur Futterstelle oder zum Abtransport von erlegtem Wild. Weiterhin kann, insbesondere in der unteren Stellung, die Kabine als Aufenthaltsraum gelten,
weil eine Bank oder ein Tisch stets aufrecht stehen bleiben.

Die vorbeschriebene erfindungsgemäße Lösung, die Kabine aufrechtstehend aus dem Gestell nach oben hochzufahren, hat den Vorteil, daß
die Kabine in verschiedene Höhenlagen hochfahrbar ist, so daß sie
als Hochsitzstand den örtlichen Verhältnissen entsprechend angepaßt
werden kann. Mit dieser Lösung ist sie aber auch für andere Anwendungsfälle, z.B. für Sportreporter bei Sportveranstaltungen, nutzbar.

In weiterer erfindungsgemäßer Ausgestaltung wird vorgeschlagen, daß
der Hänger einen rechteckigen geschlossenen Rahmen aufweist und an
allen vier Ecken des Rahmens in horizontaler Ebene verlaufend jeweils
ein Rohr mit rechteckigem Querschnitt angeordnet ist, wobei diese
vier Rohre zur Längsachse des Hängers in einem Winkel von 45° angeordnet sind, weiterhin einem jeden Rohr zugeordnet ein längsverschiebbares Innenrohr angeordnet ist, das an seinem äußeren Ende eine vertikal gerichtete Verstellspindel aufweist, die an ihrem unteren Ende
mit einer Pratze versehen ist.

0184636

Die Erfindung ist in der Zeichnung beispielhaft erläutert.

Es zeigen:

Figur 1          einen Anhänger mit Kabine als Hochsitzstand,

Figur 2          eine Detaillösung nach Figur 1

Figur 3          den Hochsitzstand nach Figur 1 in der Ansicht
                 von hinten,

Figur 4          das teilweise Abklappen  der Kabine nach Figur 1
                 in  die Ausgangsstellung,

Figur 5          das Gestell des Hängers in der Ansicht von oben,

Figur 6          einen abgewandelten Hochsitzstand in Seitenansicht,

Figur 7          die Vorrichtung nach Figur 6 bei abgesenkter Kabine.

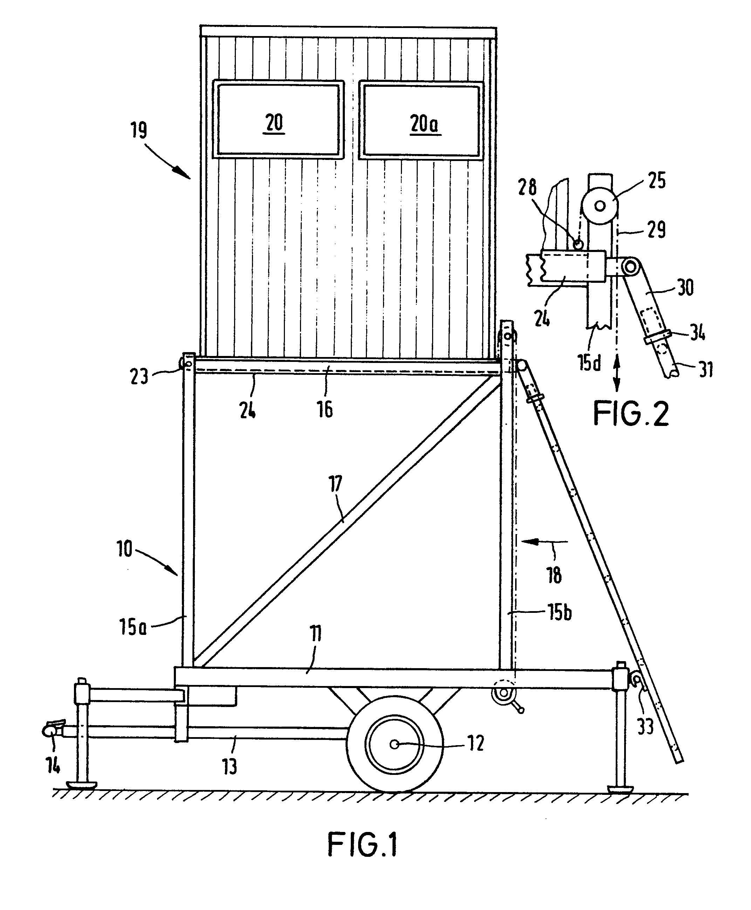

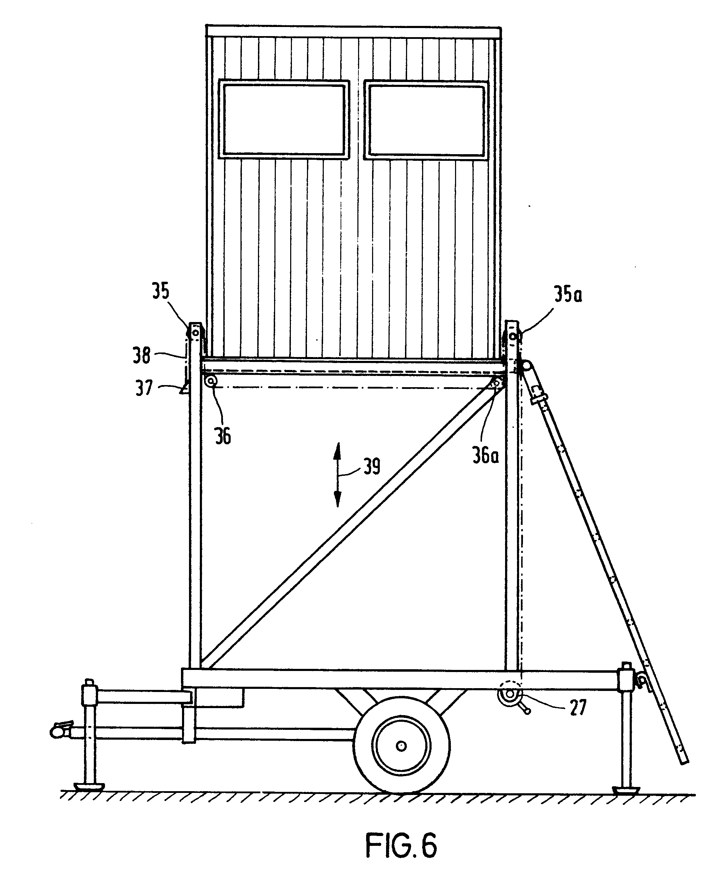

Figur 1 zeigt in der Seitenansicht einen Hänger 10, bestehend aus dem
rechteckigen horizontalen Gestell 11 mit den in Figur 5 einzeln dargestellten längsverlaufenden Streben 11a und 11b sowie den querverlaufenden Streben 11c und  11d. Vorhanden ist die Radachse 12 mit
der Deichsel 13 sowie der Anhängerkupplung 14.

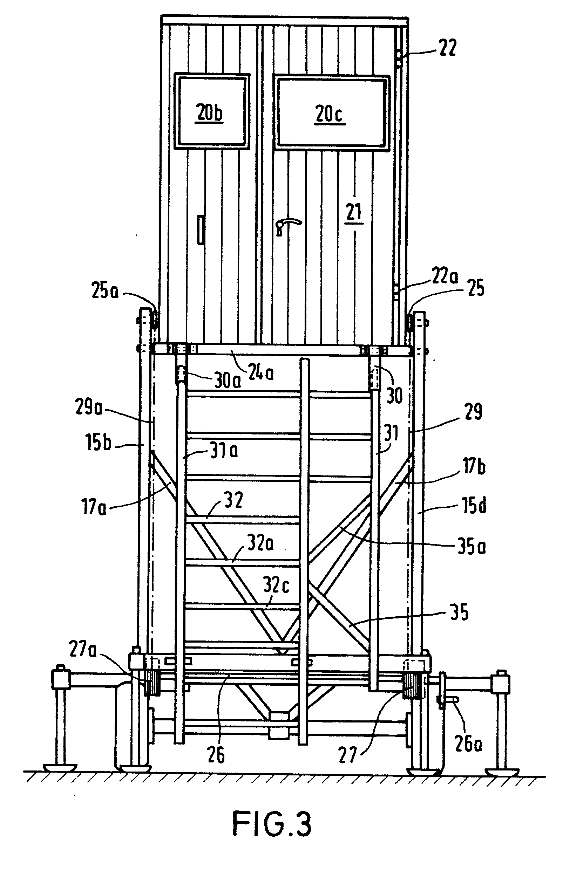

Von den Kanten des Gestells 11 gehen jeweils zugeordnet Streben aus,
von denen in Figur 1 die Streben 15a und 15b und zusätzlich in
Figur 5 die Streben 15c und 15d auf der anderen Seite dargestellt sind. Die oberen Enden dieser vier Streben sind verbunden durch
horizontale Streben 16 mit der Maßgabe, daß diese Streben 16 an
den beiden Seiten und an der Vorderseite zur Verbindung der Streben
15a und 15c vorhanden sind. Weiterhin sind an den beiden Seiten und
an der vorderen Seite Diagonalstreben 17 bzw. 17a und 17b vorhanden.
Dies bedeutet, daß der so gebildete aus Streben zusammengesetzte
Quader an der hinteren Seite 18 offen ist. Dies ist notwendig, weil
die Kabine 19, die an allen vier Seiten in Fenstern 20, 20a usw.
und auch entsprechend der Darstellung in Figur 3 mit einer Tür 21
versehen ist, die um die Türangel 22, 22a geöffnet wird, im Bereich
ihres Bodens 24 an der querverlaufenden vorderen Kante eine Schwenkachse 23 hat. Diese Schwenkachse 23 liegt somit axial zur Längsachse
der vorderen Strebe 16a. Sofern eine vordere obere Querstrebe 16a
vorhanden ist, dann kann die vordere Kante des Bodens lediglich ein
Lager haben, um die Verschwenkbarkeit der Kabine 19 um diese Drehachse 23 zu ermöglichen. Es sei bemerkt, daß eine besondere körperliche Strebe 16a auch wegfallen kann, weil der Boden 24 der Kabine
bzw. der Rahmen des Bodens, der ohnehin ausreichend steif bemessen
ist, die vorerwähnte querverlaufende obere vordere Strebe 16a ersetzen kann. Jedenfalls ist die erfindungsgemäße Lösung vorgesehen,
daß die Kabine im Bereich ihres Bodens an der hoch gelegenen querverlaufenden Kante, die zur Radachse 12 des Hängers parallel verläuft, schwenkbar ist. Um die Schwenkbarkeit zu erreichen, zeigt
Figur 2, daß die beiden hinteren Streben 15b und 15d nach oben verlängert sind und im Bereich dieser Verlängerung jeweils eine Seilumlenkrolle 25 bzw. 25a haben.

Am Gestell 11 des Hängers ist im hinteren Bereich querverlaufend
eine Drehachse 26 gelagert, die an einem Ende mit der Handkurbel 26a
versehen ist. An der Drehachse sind zwei Seilwinden 27 und 27a vorhanden. An der einen Seite des Bodengestells 24 ist über eine Halterung 28 das Seil 29 angelenkt, das über die Seilrolle 25 zur Seiltrommel 27 geführt ist, während gegenüberliegend das Seil 29a über
die Seilrolle 25a und die Winde 27a geführt ist.

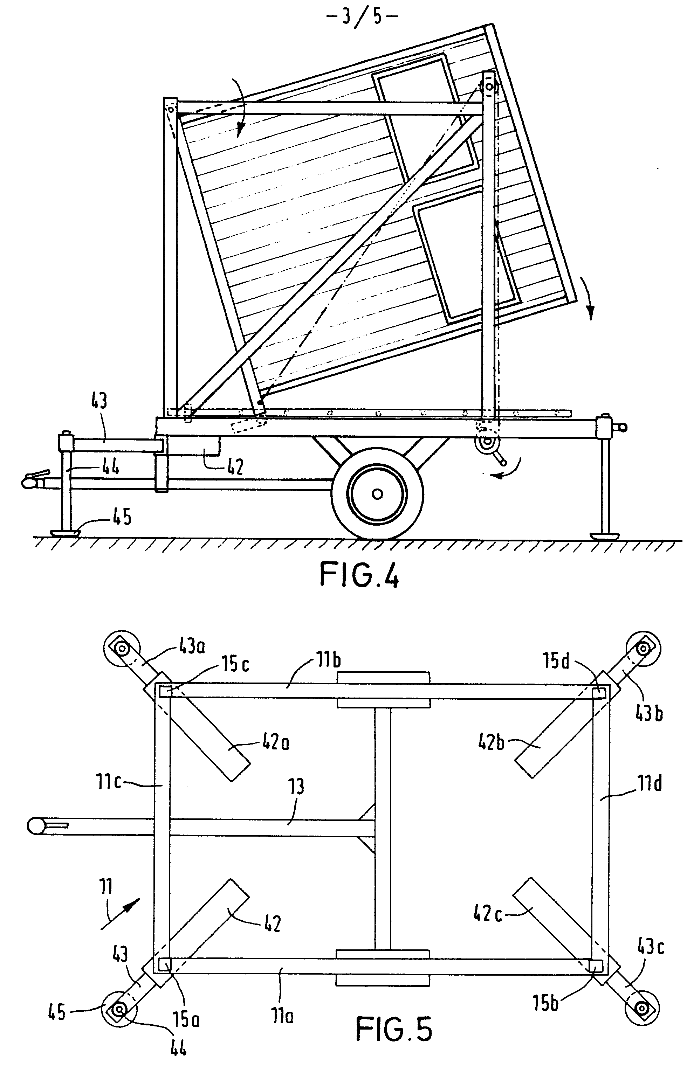

Da die Seilrollen 25, 25a oberhalb des Bodens 24 der Kabine angeordnet sind, ist es möglich, die Kabine über diese Seilrollen in Verbindung mit der Winde um die Schwenkachse 23 aus der unteren Ausgangsstellung in die in Figur 4 dargestellte Hochstellung zu schwenken. Es sei bemerkt, daß die Seilrollen 25, 25a auch in der Ebene
der Streben 16 angeordnet sein können. Zum Ausgleich für die notwendige Höhendifferenz können dann an dem Boden 24 der Kabine nach unten
gerichtete Streben kurzer Länge vorhanden sein, an denen dann die
beiden Seile 29, 29a angelenkt sind.

Die hintere Querstrebe 24a des Bodens der Kabine ist mit ausreichendem Seitenabstand mit zwei nach außen und in Richtung nach unten
weisenden Rohrstücken 30, 30a versehen, in die die Holme 31, 31a eingreifen, die in Verbindung mit den Sprossen 32, 32a, 32b usw. eine Leiter bilden. Im unteren Bereich sind die Holme 31 und 31a mit zugeordneten Klauen 33 versehen, die von oben die Querstrebe 11d (Figur 5) umgreifen. Diese ist zu diesem Zweck vorzugsweise als Rundrohr ausgebildet.

In der Praxis wird somit die Kabine in der oberen Stellung etwas über die Horizontallage hinaus hochgeschwenkt. Dann werden die oberen Enden der Holme 31, 31a der Leiter in die Rohrstücke 30, 30a eingeschoben und die Leiter so weit angehoben, daß die Klauen 33 den Holm 11d umgreifen. Da in den oberen Enden der Holme 30, 30a noch, wie aus Figur 2 ersichtlich ist, in einem Abstand zum Ende ein umlaufender Bund 33 angeschweißt ist, ergibt sich, daß mit dem dann erfolgenden geringfügigen Ablassen, damit der Boden der Kabine in der Horizontallage ist, eine Abstützung der Kabine vorhanden ist, weil die vorderen Enden der Rohrstücke 30 an dem Bund 34 und die Klauen an der Strebe 11d anliegen.

Figur 3 zeigt, daß die Leiter insgesamt drei Holme hat und im oberen Bereich in der Wirkung lange Sprossen vorhanden sind, um einen einfachen Zugang durch die Tür 21 zu erhalten. Im rechten unteren Teil sind Diagonalstreben 35, 35a vorhanden.

Figur 4 zeigt die weitgehend abgeschwenkte Kabine und die auf dem Chassis 11 abgelegte Leiter.

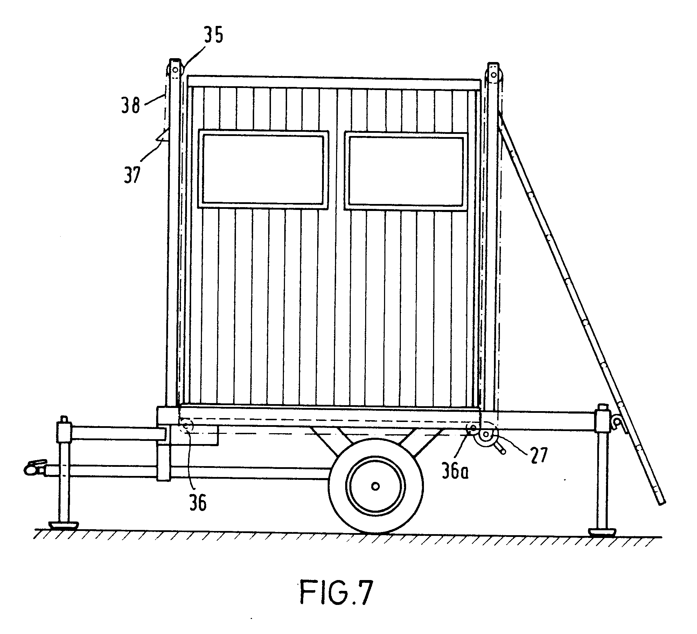

Figur 6 zeigt eine abgewandelte Lösung. Danach sind alle vier Vertikalstreben 15a, 15b, 15c und 15d nach oben verlängert und mit Seilumlenkrollen 35 versehen, von denen aus Figur 6 die beiden Umlenkrollen 35 und 35a ersichtlich sind. Im Bereich der unteren Kanten der Kabine 19 sind Umlenkrollen 36 vorhanden, wobei Figur 6 ebenfalls lediglich die seitlichen Umlenkrollen 36 und 36a zeigt. Im Bereich des oberen Endes des vertikalen Holmes 15a ist über eine Befestigung 37 das Seil 38 angelenkt, das über die Seilrolle 35, 36, 36a und 35a zu der Seiltrommel 27a geführt ist, während auf der anderen Seite ein weiteres Seil vorhanden ist, das in entsprechender Weise auf die weitere Seiltrommel 27 geführt ist. Somit kann, wie die Figuren 6 und 7 zeigen, die Kabine in stets aufrechter Stellung in angegebener Doppelpfeilrichtung 39 auf- und abgesenkt werden. Diese Lösung hat den Vorteil, daß die Kabine in verschiedenen Höhenlagen ausschwenkbar ist, so daß eine Anpassung an örtliche Verhältnisse möglich ist. Da die Kabine ihre Horizontalstellung beibehält, kann sie zugleich als Transporteinrichtung dienen, beispielsweise so zum Transport von Futter an die Fütterungsstelle. Auch können in der Kabine Sitzbänke mit Schubladen oder dergleichen vorhanden sein.

Figur 6 zeigt eine abnehmbare Leiter, wie dies zu Figur 1 beschrieben ist.

Figur 7 zeigt, daß die Leiter 40 ortsfest sein kann. Sie ist dann entsprechend der Darstellung in Figur 3 so gestaltet, daß in ihrem unteren Bereich der Zugang zu der Tür der Kabine in der unteren
Stellung leicht möglich ist. Vorteilhaft ist sie in ihrem oberen
Bereich ebenfalls verbreitert, um durch die geöffnete Tür in die
Kabine zu gelangen.

Um eine verbesserte Abstützung zu erreichen, sind an den vier Ecken
des Rahmens 11 in einem Winkel von jeweils 45° zur Längsachse bzw.
Deichsel gerichtete Rohrstücke rechteckigen Querschnitts 42, 42a,
42b und 42c vorhanden, in denen zugeordnet Innenrohre 43, 43a, 43b,
43c vorhanden sind, die an ihren vorderen  Enden jeweils eine
Spindel 44 mit einer Pratze 45 tragen, damit eine ausreichende
Standfestigkeit mit Höhenregulierung vorhanden ist.

- Ansprüche -

A n s p r ü c h e

1. Für den Straßenbetrieb tauglicher Anhänger eines Kraftfahrzeuges, insbesondere Personenkraftwagens, mit einer Kabine, die einen Zugang und Fenster aufweist, d a d u r c h   g e k e n n - z e i c h n e t ,   daß die Kabine (19) auf dem Anhänger (10) in der Höhenlage verstellbar angeordnet ist.

2. Anhänger nach Anspruch 1, d a d u r c h   g e k e n n - z e i c h n e t ,   daß an dem Gestell des Anhängers an den beiden gegenüberliegenden Seiten, insbesondere Längsseiten nach oben ragende Streben (15a, 15b, 15c, 15d) angeschweißt sind, an denen die Kabine befestigt und in der Höhe verstellbar  ist.

3. Vorrichtung nach den Ansprüchen 2 und 3, d a d u r c h g e k e n n z e i c h n e t ,   daß an dem Gestell (11) des Hängers (10) eine Seilwinde (27) angeordnet ist und auch an den oberen Enden des die Kabine tragenden Gestells bzw. der Streben (15) Seilumlenkrollen (23) angeordnet sind.

4. Anhänger nach den Ansprüchen 1 bis 3, d a d u r c h g e k e n n z e i c h n e t ,   daß die Streben (15) einer jeden Seite zu einem Rechteck zusammengefügt sind und an den gegenüberliegenden oberen Ecken des Rechtecks die Drehachse (23) der als Quader ausgebildeten Kabine (19) vorhanden ist, die dort an ihrer

0184636

unteren, parallel zur Drehachse (13) der Kabine bzw. Radachse (12) des Anhängers verlaufenden Kante des Kabinenbodens (24) schwenkbar angelenkt ist und an den beiden anderen unteren Kanten des Bodens der Kabine jeweils zugeordnet ein Seil (29) bzw. (29a) angelenkt ist, das über eine zugeordnete Rolle (25) bzw. (25a) geführt ist, die an der oberen Kante des Rahmens gelagert ist und die beiden Seile (29) und (29a) zu einer Seiltrommel (27, 27a) geführt sind, die an dem Gestell (11) des Hängers befestigt und mit einem Antrieb, insbesondere in Gestalt einer Handkurbel (26), versehen ist.

5. Vorrichtung nach Anspruch 4, d a d u r c h   g e k e n n - z e i c h n e t ,   daß die an den oberen Kanten des Rahmens angeordneten Seilumlenkrollen (25, 25a) an nach oben führenden Verlängerungen des Rahmens angeordnet und somit die Drehachsen der Seilumlenkrollen (25, 25a) höher als die Schwenkachse (23) der Kabine angeordnet sind.

6. Vorrichtung nach Anspruch 5, d a d u r c h   g e k e n n - z e i c h n e t ,   daß in der Hoch- und Gebrauchsstellung die Kabine (19) an der Kante ihres Bodens durch zwei Holme (31,31a), die zugleich die Sprossen (32) einer Leiter tragen, an dem Gestell (11) des Hängers (10) abgestützt ist.

0184636

7. Vorrichtung nach Anspruch 5, d a d u r c h    g e k e n n -
   z e i c h n e t ,    daß an der Unterkante des Kabinenbodens
   zwei nach unten und in Richtung nach außen abstehende Zapfen
   (30, 30a) angeordnet sind, die mit den Holmen (31, 31a) der
   Leiter eine Steckverbindung darstellen und an den beiden
   Holmen der Leiter Klauen (33) vorhanden sind, die in zugeordnete Halterungen an dem Gestell (11) des Hängers (10) eingreifen.

8. Vorrichtung nach Anspruch 6, d a d u r c h    g e k e n n -
   z e i c h n e t ,    daß die Zapfen (30, 30a) am Boden der
   Kabine (19) als Rohre ausgebildet sind, in die die  oberen
   Enden der Holme (31, 31a) eingreifen und die an den Holmen angeordneten Klauen (33) von oben eine Querstrebe (11d) des Hängers (10) umgreifen.

9. Vorrichtung nach den Ansprüchen 1 und 2, d a d u r c h
   g e k e n n z e i c h n e t ,    daß auf dem Rahmen des Hängers
   ein aus  Metallstäben zusammengesetztes quaderförmiges Gestell
   befestigt bzw. angeschweißt ist, in dem die quaderförmige Kabine (19) angeordnet und geführt ist, wobei an jeder der oberen
   Kanten des Gestells jeweils eine Seilumlenkrolle (35) und an
   den vier Kanten des Bodens der Kabine jeweils eine Seilumlenkrolle (36) angeordnet ist und an jeder Längsseite zugeordnet
   an dem Gestell ein Seil (38) über die Rolle (35) des Gestells,
   dann über die beiden Rollen (36, 36a) des Bodens und dann über
   die weitere Rolle (35a) des Gestells zu einer Seilwinde (27)
   am Gestell des Hängers (11) geführt ist.

0184636

10. Vorrichtung nach Anspruch 1 und einem oder mehreren der Ansprüche 2 bis 7, d a d u r c h  g e k e n n - z e i c h n e t , daß der Hänger einen rechteckigen geschlossenen Rahmen (11a, 11b, 11c, 11d) aufweist und an allen vier Ecken des Rahmens in horizontaler Ebene verlaufend jeweils ein Rohr (43) mit rechteckigem Querschnitt angeordnet ist, wobei diese vier Rohre (42, 42a, 42b, 42c) zur Längsachse des Hängers in einem Winkel von 45° angeordnet sind, weiterhin einem jeden Rohr (42) zugeordnet ein längsverschiebbares Innenrohr (43) angeordnet ist, das an seinem äußeren Ende eine vertikal gerichtete Verstellspindel (44) aufweist, die an ihrem unteren Ende mit einer Pratze (45) versehen ist.

11. Vorrichtung nach den Ansprüchen 5 bis 7, d a d u r c h g e k e n n z e i c h n e t , daß die Leiter außermittig angeordnet und in ihrem oberen Bereich verlängerte Sprossen (32) aufweist, die in einen zusätzlichen Holm (31) gelagert sind.

FIG.2

FIG.1

0184636

FIG.3

0184636

FIG.4

FIG.5

0184636

FIG.6

FIG.7

Europäisches
Patentamt

**EUROPÄISCHER RECHERCHENBERICHT**

0184636

Nummer der Anmeldung

EP  85 11 3066

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-7 707 070  (TRAUB) <br> * Figuren 1-5 * <br><br> --- | 1-5,10 | A 01 M  31/02 |
| X | DE-U-8 215 843  (BOCKWINKEL) <br> * Seite 6, Zeilen 4-11, Zeilen 27-30; Figuren 1-4 * | 1,10 | |
| A | | 6-8 | |
| | ----- | | |
| | | | RECHERCHIERTE SACHGEBIETE (Int. Cl.4) <br><br> A 01 M  31/00 |

Der vorliegende Recherchenbericht wurde für alle Patentansprüche erstellt.

| Recherchenort | Abschlußdatum der Recherche | Prüfer |
|---|---|---|
| BERLIN | 08-01-1986 | LUDWIG H J |